# EUROPÄISCHE PATENTSCHRIFT

(11) **EP 3 585 660 B1**
(45) Veröffentlichungstag und Bekanntmachung des Hinweises auf die Patenterteilung: **12.08.2020**
(21) Anmeldenummer: 18707672.4
(22) Anmeldetag: 20.02.2018
(51) Int. Cl.: B60S 3/06

(54) **VERFAHREN UND ANLAGE ZUM BEHANDELN DER OBERFLÄCHE EINES FAHRZEUGS**
METHOD AND SYSTEM FOR TREATING THE SURFACE OF A VEHICLE
PROCÉDÉ ET INSTALLATION POUR LE TRAITEMENT DE LA SURFACE D'UN VÉHICULE

(30) Priorität: 24.02.2017 DE 102017103841
(43) Veröffentlichungstag der Anmeldung: 01.01.2020
(73) Patentinhaber: WashTec Holding GmbH, 86153 Augsburg (DE)
(72) Erfinder: AUER, Robert, 86391 Stadtbergen (DE); CONRAD, Ferdinand, 86159 Augsburg (DE)
(74) Vertreter: Reitstötter Kinzebach
(86) Internationale Anmeldenummer: PCT/EP2018/054120
(87) Internationale Veröffentlichungsnummer: WO 2018/153845

(56) Entgegenhaltungen:
- EP-A2- 1 795 408
- WO-A2-2004/089708
- JP-A- 2005 186 854

## Beschreibung

Die vorliegende Erfindung betrifft ein Verfahren zum Behandeln der Oberfläche eines Fahrzeugs, bei dem eine Fahrzeugoberfläche mittels zumindest einer rotierenden Waschbürste behandelt wird, wobei die Waschbürste Behandlungselemente umfasst, deren Oberflächen bei der Behandlung mit der Fahrzeugoberfläche in reibenden Kontakt gebracht werden. Ferner betrifft die Erfindung eine Anlage zum Behandeln der Oberfläche eines Fahrzeugs mit einer rotierbar um eine Drehwelle gelagerten Waschbürste, die einen mit der Drehwelle gekoppelten Motor und Behandlungselemente für einen reibenden Kontakt mit der Fahrzeugoberfläche umfasst. Die Anlage zum Behandeln der Oberfläche eines Fahrzeugs ist insbesondere eine Waschanlage.

Bei dem Betrieb einer Waschanlage ergibt sich das Problem, dass sich bewegende Teile der Anlage durch Gebrauch, Alterung oder Verschleiß Veränderungen unterworfen sind. Um ein dauerhaft zufriedenstellendes Behandlungsergebnis, insbesondere Waschergebnis, beim Betrieb der Waschanlage zu erzielen, ist es erforderlich, diese Veränderungen bei der Steuerung der Waschanlage zu berücksichtigen.

Die WO 2004/089708 A2 beschreibt das Problem, dass nach einiger Zeit Deformationen bewegter Teile innerhalb des Motors auftreten, welcher die Waschbürste antreibt. Dies hat zur Folge, dass der Motor ineffizienter arbeitet und eine höhere Leistungsaufnahme zeigt. Zur Lösung dieses Problems wird vorgeschlagen, die Waschbürste vor dem Waschbetrieb im Leerlauf zu betreiben, und dabei die Leistungsaufnahme zu bestimmen. Aus dieser Leistungsaufnahme im Leerlauf wird der Anpressdruck der Bürste an die Oberfläche des Fahrzeugs mittels einer Auswertung der Motorleistungsaufnahme bestimmt.

Die EP 1 795 408 B1 beschreibt eine Behandlungsanlage für Fahrzeuge mit einer zustellbaren rotierenden Behandlungsbürste mit einem elektrischen Antriebsmotor für den Drehantrieb der Behandlungsbürste. Der Antriebsmotor der Behandlungsbürste ist dabei als steuerbarer Wechselstrommotor mit einem Frequenzumrichter ausgebildet, wobei der Frequenzumrichter eine integrierte Messeinrichtung für den Motorstrom aufweist. Mittels einer Zustelleinrichtung wird die Behandlungsbürste in Richtung der zu behandelnden Oberfläche bewegt. Diese Zustellung der Behandlungsbürste kann mittels einer Steuerung momentabhängig erfolgen, wobei die Messsignale der Messeinrichtung des Motorstroms der Bürstenantriebe verarbeitet werden. Der Motorstrom repräsentiert dabei das Drehmoment des Antriebsmotors, welches wiederum eine Referenz für die Eintauchtiefe oder den Anpressdruck der Behandlungsbürste darstellt. Von der Steuerung wird das Antriebsmoment bzw. die Eintauchtiefe auf einen voreingestellten Wert gesteuert und geregelt bzw. im Wesentlichen konstant gehalten.

Die JP 2005 186854 A beschreibt eine Fahrzeugwaschanlage, bei welcher der Austauschzeitpunkt einer Waschbürste automatisch und zuverlässig erkannt werden kann. Hierfür werden die Drehzahl und die sich durch den Verschleiß ergebene Anpressdruckbelastung der Motoren der Waschbürsten erfasst.

Bei den im Stand der Technik beschriebenen Verfahren und Behandlungsanlagen ergibt sich das Problem, dass Veränderungen der mechanischen Parameter der Behandlungselemente der Behandlungsbürste nur unzureichend berücksichtigt werden. Wenn sich beispielsweise die Biegesteifigkeit, Dicke oder Bestückungsdichte der Behandlungselemente der Behandlungsbürste durch den dauerhaften Gebrauch der Behandlungsbürste verringert hat, ergibt sich eine geringere Reibungskraft, die zwischen der rotierenden Behandlungsbürste und der zu behandelnden Fahrzeugoberfläche wirkt. Dies führt zu einer geringeren Leistungsaufnahme des Motors. In diesem Fall verringert sich der Abstand zwischen der Bürstenwelle und der zu behandelnden Fahrzeugoberfläche, bis der voreingestellte Wert für die Leistungsaufnahme erreicht wird. Wenn der Abstand zwischen der Bürstenwelle und der zu behandelnden Fahrzeugoberfläche nicht verändert werden soll, kann alternativ die Drehzahl der Behandlungsbürste erhöht werden, damit ein vorab definierter Wert für die Leistungsaufnahme des Motors wieder erreicht werden kann. Wird keine dieser Anpassungen durchgeführt kann dies mit der Zeit zu nicht zufriedenstellenden Behandlungsergebnissen führen. Andererseits kann es bei zu dichtem Kontakt zum Fahrzeug oder bei zu hohen Drehzahlen zu Schäden an Bauteilen, wie z.B. Außenspiegeln oder Scheibenwischern, kommen.

Der vorliegenden Erfindung liegt daher die Aufgabe zugrunde, ein Verfahren und eine Anlage der eingangs genannten Art bereitzustellen, welche auch dann ein zufriedenstellendes Behandlungsergebnis einer Fahrzeugoberfläche bereitstellen, wenn sich die mechanischen Parameter der Behandlungselemente, beispielsweise durch Gebrauch, Alterung oder Verschleiß, verändert haben.

Erfindungsgemäß wird diese Aufgabe durch ein Verfahren mit den Merkmalen des Anspruchs 1 und eine Anlage mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird eine Fahrzeugoberfläche mittels zumindest einer rotierenden Behandlungsbürste behandelt, wobei die Behandlungsbürste Behandlungselemente umfasst, deren Oberflächen bei der Behandlung mit der Fahrzeugoberfläche in reibenden Kontakt gebracht werden. Bei dem Verfahren wird eine Referenzmessung durchgeführt, bei der die Behandlungsbürste in Rotation versetzt wird und in eine definierte Position relativ zu einem Referenzelement bewegt wird, so dass die Oberfläche der Behandlungselemente in reibenden Kontakt mit der Oberfläche der Referenzelemente gebracht werden, und dabei wird der Wert der Reibungskraft direkt oder indirekt gemessen. Bei der Behandlung der Fahrzeugoberfläche wird die Behandlungsbürste in Abhängigkeit von dem bei der Referenzmessung gemessenen Wert der Reibungskraft geregelt.

Bei dem erfindungsgemäßen Verfahren ist vorteilhafterweise eine Anpassung der Regelung der Behandlungsbürste bei der Behandlung der Fahrzeugoberfläche an absolute Materialveränderungen der Behandlungselemente möglich. Auf diese Weise kann bei dem erfindungsgemäßen Verfahren vorteilhafterweise sichergestellt werden, dass das Behandlungsergebnis dauerhaft auch dann zufriedenstellend ist, wenn sich die mechanischen Parameter der Behandlungselemente, beispielsweise durch Gebrauch, Alterung oder Verschleiß, verändern. Bei bekannten Verfahren, bei denen beispielsweise die Leistungsaufnahme des Motors mit einem Referenzwert verglichen wird, können nur relative Schwankungen der Antriebseinheit im Leerlauf ausgeglichen werden.

Da bei dem erfindungsgemäßen Verfahren die Referenzmessung bei einer bekannten Position der Behandlungsbürste relativ zu dem Referenzelement durchgeführt wird, ist der Wert der Reibungskraft, die bei der Rotation der Behandlungsbürste zwischen den Behandlungselementen und dem Referenzelement wirken, nicht von etwaigen Unterschieden des Abstands der Behandlungsbürste von dem Referenzelement abhängig. Die Behandlungsbürste weist somit eine definierte Eintauchtiefe in Bezug auf das Referenzelement auf. Da die Referenzmessung mittels eines Referenzelements durchgeführt wird, dessen Position und Geometrie bekannt ist, können etwaige Veränderungen der mechanischen Parameter der Behandlungselemente reproduzierbar erfasst werden. Eine solche reproduzierbare Erfassung ist nicht durch eine Messung beispielsweise der Leistungsaufnahme des Motors für die Behandlungsbürste möglich, während diese mit ihren Behandlungselementen an der Fahrzeugoberfläche reibt, da die exakte Position der Fahrzeugoberfläche relativ zu der Behandlungsbürste nicht ausreichend genau bekannt ist. Auch bei der Messung der Leistungsaufnahme im Leerlauf der Behandlungsbürste, können keine Veränderungen der mechanischen Parameter der Behandlungselemente erfasst werden.

Gemäß einer Ausgestaltung des erfindungsgemäßen Verfahrens wird bei der Referenzmessung zunächst die Behandlungsbürste in Rotation versetzt und dann wird sie in die definierte Position relativ zu dem Referenzelement bewegt. Während der Bewegung der Behandlungsbürste in Richtung des Referenzelements können dann Werte der Reibungskraft direkt oder indirekt in Abhängigkeit von dem Abstand der Behandlungsbürste von dem Referenzelement, d. h. der Eintauchtiefe, erfasst werden. Während der Bewegung der Behandlungsbürste in Richtung des Referenzelements bleibt dabei insbesondere die Drehzahl konstant. Vorteilhafterweise können in diesem Fall die erfassten Werte für die Reibungskraft bei geringeren Eintauchtiefen auch bei der Regelung der Behandlungsbürste bei der Behandlung der Fahrzeugoberfläche verwendet werden. Alternativ wäre es jedoch auch möglich, dass die Behandlungsbürste zunächst in die definierte Position relativ zu dem Referenzelements bewegt wird und erst dann in Rotation versetzt wird.

Der Wert der Reibungskraft bei der Referenzmessung kann beispielsweise mittels der Leistungsaufnahme gemessen werden, die erforderlich ist, um die Behandlungsbürste bei einer bestimmten Drehzahl in Rotation zu halten. Beispielsweise kann die Leistungsaufnahme des Motors erfasst werden, welcher die Behandlungsbürste in Rotation versetzt. In diesem Fall wird die Reibungskraft somit indirekt gemessen. Die direkte oder indirekte Messung der Reibungskraft kann jedoch auch auf andere, an sich bekannte Weise erfolgen.

Gemäß einer Ausgestaltung des erfindungsgemäßen Verfahrens wird bei der Behandlung der Fahrzeugoberfläche die Leistungsaufnahme der Behandlungsbürsten in Abhängigkeit von dem gemessenen Wert der Reibungskraft geregelt. Die Leistungsaufnahme der Behandlungsbürste wird somit nicht, wie aus dem Stand der Technik bekannt, auf einen festen, vorab definierten Wert geregelt, sondern auf einen Wert, welcher sich aus der Referenzmessung ergibt, die mittels des Referenzelements durchgeführt wird.

Der Sollwert der Leistungsaufnahme der Behandlungsbürste bei der Behandlung der Fahrzeugoberfläche bei einer bestimmten Eintauchtiefe entspricht insbesondere dem gemessenen Wert der Leistungsaufnahme der Behandlungsbürste bei dieser Eintauchtiefe bei der Referenzmessung. Diese Ausgestaltung wird insbesondere dann gewählt, wenn die Fläche, an welcher die Behandlungsbürste bei der Referenzmessung anliegt in etwa dieselbe Größe hat wie die Fläche, an welcher die Behandlungsbürste bei der Behandlung der Fahrzeugoberfläche anliegt. Hierdurch wird vorteilhafterweise erreicht, dass absolute Materialänderungen bei den Behandlungselementen so berücksichtigt werden können, dass dauerhaft ein zufriedenstellendes Behandlungsergebnis erzielt wird.

Die Eintauchtiefe ist dabei die Differenz des Radius der Behandlungsbürste bei der Drehgeschwindigkeit, mit welcher die Behandlungsbürste in Betrieb in Rotation versetzt wird, und dem Abstand der Drehachse der Behandlungsbürste von der zu behandelnden Oberfläche. Die Eintauchtiefe gibt somit an, wie die Behandlungselemente an der zu behandelnden Oberfläche reiben.

Wenn bei einer Ausgestaltung des erfindungsgemäßen Verfahrens eine Seitenfläche des Fahrzeugs behandelt wird, dann wird insbesondere die Höhe des Fahrzeugs gemessen und bei der Behandlung der Fahrzeugoberfläche wird der Sollwert der Leistungsaufnahme der Behandlungsbürste bei einer bestimmten Eintauchtiefe der Behandlungsbürste in Abhängigkeit von dem gemessenen Wert der Leistungsaufnahme der Behandlungsbürste bei dieser Eintauchtiefe bei der Referenzmessung und in Abhängigkeit von der gemessenen Höhe des Fahrzeugs gewählt. Hierdurch wird erreicht, dass die Fläche, an welcher die Behandlungsbürste bei der Referenzmessung anliegt, gegebenenfalls größer oder kleiner ist als die Fläche, an welcher die Behandlungsbürste bei der Behandlung der Seitenfläche des Fahrzeugs anliegt. Durch die unterschiedlich großen Flächen ergibt sich jeweils eine andere Leistungsaufnahme der Behandlungsbürste. Dies kann bei dieser Ausgestaltung dadurch ausgeglichen werden, dass die Höhe und damit die Größe der Fläche bei der Behandlung der Seitenfläche des Fahrzeugs berücksichtigt wird. Die Höhe des Fahrzeugs kann beispielsweise mittels einer Dachbürste bestimmt werden. Eine Messeinrichtung einer solchen Dachbürste erfasst die Höhe der Dachbürste an einer bestimmten Längsposition des Fahrzeugs während der Behandlung durch die Bürste. Diese Höhe entspricht der Fahrzeughöhe mit einem entsprechenden Offset. Der Verlauf der Dachbürstenhöhe über das Fahrzeug wird in der Steuerung der Fahrzeugwaschanlage gespeichert und steht dann als zweidimensionale Fahrzeugkontur zur Verfügung. Diese kann dann bei der Behandlung der Seitenfläche des Fahrzeugs berücksichtigt werden. Hierbei kann auch berücksichtigt werden, an welcher Position in Längsrichtung sich die Behandlungsbürste befindet. Der Sollwert der Leistungsaufnahme kann in diesem Fall in Abhängigkeit von der Höhe des Fahrzeugs bei der Position der Behandlungsbürste in Längsrichtung des Fahrzeugs gewählt werden.

Bei einer anderen Ausgestaltung des erfindungsgemäßen Verfahrens wird eine Dachfläche des Fahrzeugs behandelt. Da sich in diesem Fall nicht so große Schwankungen der Breite der Fahrzeuge ergeben, kann der Sollwert der Leistungsaufnahme der Behandlungsbürste bei der Behandlung des Fahrzeugs dann dem gemessenen Wert der Leistungsaufnahme der Behandlungsbürste bei der Referenzmessung entsprechen oder unabhängig von der Geometrie des Fahrzeugs aus diesem Wert berechnet werden.

Gemäß einer Ausgestaltung des erfindungsgemäßen Verfahrens wird bei der Behandlung der Fahrzeugoberfläche die Leistungsaufnahme bis zum Erreichen des Sollwerts der Leistungsaufnahme der Behandlungsbürste bei der bestimmten Eintauchtiefe in Abhängigkeit von den erfassten Werten der Leistungsaufnahme der Behandlungsbürste bis zu dieser Eintauchtiefe bei der Referenzmessung bestimmt. Bei der Referenzmessung wird somit eine Kurve erfasst, welche die Leistungsaufnahme in Abhängigkeit von der Eintauchtiefe angibt. Diese Kurve wird dann bei der Behandlung der Fahrzeugoberfläche verwendet, um die Leistungsaufnahme bis zum Erreichen einer bestimmten Eintauchtiefe zu regeln, wobei beim Erreichen der bestimmten Eintauchtiefe der Sollwert für die Leistungsaufnahme für diese Eintauchtiefe erreicht wird. Hierdurch wird erreicht, dass der Sollwert für die Leistungsaufnahme sehr schnell und genau erreicht wird und außerdem auch die Leistungsaufnahme bei geringeren Eintauchtiefen in Abhängigkeit von der Referenzmessung geregelt wird.

Gemäß einer weiteren Ausgestaltung des erfindungsgemäßen Verfahrens wird anhand der Werte der Reibungskraft, die während der Bewegung der Behandlungsbürste in Richtung des Referenzelements erfasst worden sind, bestimmt, ob die Behandlungselemente der Behandlungsbürste auszutauschen sind. Wenn beispielsweise die Kurve, welche die Leistungsaufnahme in Abhängigkeit von der Eintauchtiefe bei der Referenzmessung beschreibt, sehr flach ist, d. h. wenn sich die Leistungsaufnahme mit größer werdender Eintauchtiefe gar nicht oder nur sehr geringfügig vergrößert, ist dies ein Anzeichen dafür, dass die Behandlungselemente verschlissen sind und ausgetauscht werden sollten. In diesem Fall kann bei dem erfindungsgemäßen Verfahren ein Hinweis dafür ausgegeben werden, dass die Behandlungselemente ersetzt werden sollten.

Wenn bei dem erfindungsgemäßen Verfahren bei der Referenzmessung festgestellt wurde, dass beispielsweise auf Grund von Verschleißerscheinungen der Behandlungsbürste eine geringere Reibungskraft zwischen den Behandlungselementen und der Referenzfläche wirkt, kann diese Veränderung bei der Behandlung der Fahrzeugoberfläche dadurch ausgeglichen werden, dass die Drehzahl der Behandlungsbürste, und damit die Leistungsaufnahme, erhöht wird. Auch hierdurch wird sichergestellt, dass ein dauerhaft zufriedenstellendes Behandlungsergebnis erzielt wird. Dabei wird allerdings sichergestellt, dass die Drehzahl nicht einem bestimmten Grenzwert überschreitet, bei dem Beschädigungen des Fahrzeugs auftreten können.

Gemäß einer Ausgestaltung des erfindungsgemäßen Verfahrens wird die Referenzmessung zyklisch durchgeführt. Die Behandlungsbürste wird dann bei der Behandlung der Fahrzeugoberfläche insbesondere in Abhängigkeit von dem bei der letzten Referenzmessung gemessenen Wert der Reibungskraft geregelt. Beispielsweise können Referenzmessungen in bestimmten Zeitabständen oder vor jeder Behandlung einer Fahrzeugoberfläche durchgeführt werden. Das Zeitintervall für die zyklisch durchgeführten Referenzmessungen kann in Abhängigkeit von Erfahrungswerten zur Alterung und zum Verschleiß der Behandlungselemente durchgeführt werden. Hierdurch wird erreicht, dass die Referenzmessung die Behandlung der Fahrzeugoberfläche nicht unnötig häufig verzögert, gleichzeitig jedoch Veränderungen der mechanischen Parameter der Behandlungselemente bei der Behandlung der Fahrzeugoberfläche in ausreichendem Maße berücksichtigt werden.

Gemäß einer weiteren Ausgestaltung des erfindungsgemäßen Verfahrens wird die Referenzmessung nach einem Austausch der Behandlungselemente durchgeführt. Die Behandlungsbürste wird bei der Behandlung der Fahrzeugoberfläche dann insbesondere in Abhängigkeit von dem bei der letzten Referenzmessung gemessenen Wert der Reibungskraft geregelt. Wenn die Behandlungselemente erneuert oder durch andersartige Behandlungselemente ersetzt werden, ergibt sich ein anderer Wert für die Reibungskraft, die zwischen den Behandlungselementen der Behandlungsbürste und der zu behandelnden Fahrzeugoberfläche wirkt. Durch die Durchführung einer Referenzmessung nach einem Austausch der Behandlungselemente wird sichergestellt, dass die Steuerung der Behandlungsbürste zu einem zufriedenstellenden Behandlungsergebnis führt.

Gemäß einer weiteren Ausgestaltung des erfindungsgemäßen Verfahrens werden separate Referenzmessungen für entgegengesetzte Drehrichtungen bei der Rotation der Behandlungsbürste durchgeführt. Die Behandlungsbürste wird dann bei der Behandlung der Fahrzeugoberfläche in Abhängigkeit von dem Wert der Reibungskraft geregelt, der bei der letzten Referenzmessung für den Drehsinn gemessen wurde, mit dem die Behandlungsbürste bei der Behandlung der Fahrzeugoberfläche rotiert wird. Insbesondere bei neuen Behandlungsbürsten kann es vorkommen, dass aufgrund der Lagerung der Behandlungsbürste die Behandlungselemente eine Vorzugsrichtung hinsichtlich der Drehrichtung der Behandlungsbürste aufweisen. Eine solche Vorzugsrichtung kann durch die separat durchgeführten Referenzmessungen für entgegengesetzte Drehrichtungen bei der nachfolgenden Behandlung der Fahrzeugoberfläche berücksichtigt werden. Die gemessenen Werte für die Reibungskraft für die separaten Referenzmessungen gleichen sich üblicherweise mit der Zeit an. Wenn die gemessenen Werte eine vorab festgelegte Toleranz unterschritten haben, kann das Verfahren so durchgeführt werden, dass auf die separaten Referenzmessungen für entgegengesetzte Drehrichtungen verzichtet wird, und nur noch eine Referenzmessung für eine festgelegte Drehrichtung durchgeführt wird.

Bei der Referenzmessung kann beispielsweise die Behandlungsbürste in Richtung des Referenzelements bewegt werden, bis die Behandlungsbürste eine definierte Eintauchtiefe in Bezug auf das Referenzelement besitzt. Da die Behandlungsbürste zumeist eine Zustellbewegung zu der behandelnden Fahrzeugoberfläche ausführen kann, kann diese Bewegungsmöglichkeit auch genutzt werden, um die Behandlungsbürste dem Referenzelement zuzustellen. Dies hat den Vorteil, dass das Referenzelement ortsfest montiert sein kann.

Die erfindungsgemäße Anlage zum Behandeln der Oberfläche eines Fahrzeugs umfasst eine rotierbar um eine Drehwelle gelagerte Behandlungsbürste, die einen mit der Drehwelle gekoppelten Motor und Behandlungselemente für einen reibenden Kontakt mit der Fahrzeugoberfläche aufweist. Die Anlage umfasst ferner ein Referenzelement zum Durchführen einer Referenzmessung und eine Steuereinheit, die mit dem Motor gekoppelt ist und mittels derer zur Durchführung der Referenzmessung die Behandlungsbürste in Rotation versetzbar und in eine definierte Position relativ zu dem Referenzelement bewegbar ist, so dass die Oberflächen der Behandlungselemente in reibenden Kontakt mit der Oberfläche des Referenzelements gebracht werden, und dabei der Wert einer Reibungskraft direkt oder indirekt messbar ist. Die Behandlungsbürste ist dann mittels der Steuereinheit bei der Behandlung der Fahrzeugoberflächen in Abhängigkeit von dem bei der Referenzmessung gemessenen Wert der Reibungskraft regelbar. Zusätzlich können Werte der Reibungskraft bei der Referenzmessung direkt oder indirekt messbar sein, während die rotierende Behandlungsbürste in Richtung des Referenzelements bewegt wird. Die Behandlung der Fahrzeugoberflächen kann dann auch in Abhängigkeit von den bei der Referenzmessung gemessenen Werten der Reibungskraft bei der Bewegung in Richtung der definierten Position relativ zu dem Referenzelement mittels der Steuereinheit durchgeführt werden.

Die Behandlungsanlage ist insbesondere zur Durchführung des vorstehend beschriebenen Verfahrens ausgebildet. Sie weist somit auch dieselben Vorteile wie das erfindungsgemäße Verfahren auf.

Bei der Behandlungsanlage handelt es sich insbesondere um eine Waschanlage zum Reinigen der Oberfläche eines Fahrzeugs. Die Waschanlage kann als Portalanlage, Nutzfahrzeugwaschanlage oder als Waschstraße ausgebildet sein. Bei der Behandlungsbürste kann es sich um eine Seitenbürste oder eine Dachbürste handeln.

Gemäß einer Ausgestaltung der erfindungsgemäßen Anlage umfasst diese einen Bürstenspritzschutz, der benachbart zu der Behandlungsbürste angeordnet ist. Dieser Bürstenspritzschutz stellt die Funktion des Referenzelements bereit. In diesem Fall muss somit kein gesondertes Referenzelement vorgesehen sein. Die Anlage ist so ausgebildet, dass mittels der Steuereinheit die Behandlungsbürste in Richtung des Bürstenspritzschutzes bewegt werden kann, um die Referenzmessung auszuführen. Hierfür ist der Bürstenspritzschutz in geeigneter Weise mit ausreichender Stabilität befestigt.

Gemäß einer Weiterbildung der erfindungsgemäßen Anlage ist die Drehwelle der Behandlungsbürste so gelagert, dass die Behandlungsbürste in einer zur Drehwelle senkrechten Richtung bewegbar ist, wobei die Behandlungsbürste sowohl in Richtung des Fahrzeugs als auch in Richtung des Referenzelements, beispielsweise des Bürstenspritzschutzes, bewegbar ist.

Die Oberfläche des Referenzelements besitzt insbesondere eine definierte Oberflächenrauigkeit. Die Oberfläche des Referenzelements ist ferner so gebildet, dass sich die Oberflächenrauigkeit über die übliche Lebensdauer der Anlage nicht verändert, wenn Referenzmessungen mittels des Referenzelements durchgeführt werden. Die Oberfläche des Referenzelements ähnelt dabei insbesondere der üblichen Oberfläche eines Fahrzeugs, insbesondere im Hinblick auf den Reibungskoeffizienten zwischen der Oberfläche und den Behandlungselementen der Behandlungsbürste.

Die Erfindung wird nun anhand eines Ausführungsbeispiels mit Bezug zu der Zeichnung erläutert.

Die Figur zeigt schematisch wesentliche Elemente eines Ausführungsbeispiels der erfindungsgemäßen Behandlungsanlage.

Das im Folgenden beschriebene Ausführungsbeispiel betrifft eine Waschanlage 1 für ein Fahrzeug 2. Es kann sich dabei um eine Waschstraße oder eine Portalanlage handeln.

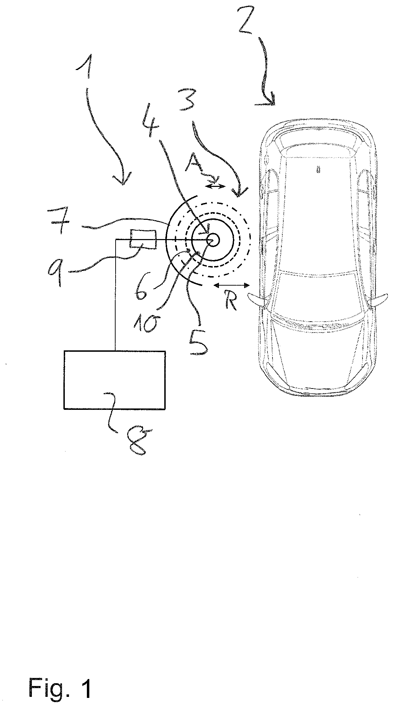

Die Waschanlage 1 umfasst als Behandlungsbürste eine Waschbürste 3, die rotierbar um eine Drehwelle 5 gelagert ist. In dem gezeigten Ausführungsbeispiel ist die Waschbürste 3 als Seitenwaschbürste ausgebildet. Die Drehwelle 5 ist mit einem Motor 4 gekoppelt, welcher als Antriebsmotor für die Drehbewegung der Waschbürste 3 dient. Radial außen sind an der Waschbürste 3 an sich bekannte Behandlungselemente 6 einem Trägerelement 10 befestigt. Der von den Behandlungselementen 6 gebildete Umfang ist in Fig. 1 im Ruhezustand der Waschbürste 3 durch eine gestrichelte Linie dargestellt. Bei einer Rotation der Waschbürste 3 bewegen sich die Behandlungselemente 6 aufgrund der Zentrifugalkraft nach außen. Der Umfang, der durch die Behandlungselemente 6 bei einer Rotation im Betrieb der Waschbürste 3 gebildet wird, ist durch eine strichpunktierte Linie in der Figur dargestellt. Der Radius ist in diesem Fall R. Es wird in diesem Zusammenhang darauf hingewiesen, dass die Figur keine maßstabgetreue Darstellung ist.

Auf der von dem Fahrzeug 2 abgewandten Seite der Waschbürste 3 ist ein Bürstenspritzschutz 7 angeordnet. Der Bürstenspritzschutz 7 ist als schalenförmig gewölbtes Schild ausgebildet, wobei die Wölbung konzentrisch zu der Waschbürste 3 ist.

Die Waschbürste 3 ist mit einer Zustelleinheit 9 gekoppelt. Mittels der Zustelleinheit 9 kann die Waschbürste 3 in Richtung des Pfeils A hin und her bewegt werden. Sie kann somit insbesondere in Richtung der Oberfläche des Fahrzeugs 2 bewegt werden. Diese Bewegung sowie die Rotation der Waschbürste 3 werden mittels einer Steuereinheit 8 gesteuert bzw. geregelt. Die Waschbürste 3 kann insbesondere bis zu einer bestimmten Eintauchtiefe zur Oberfläche des Fahrzeugs 2 bewegt werden. Die Eintauchtiefe gibt dabei an, wie weit die Fahrzeugoberfläche in die aufgrund der Rotation radial nach außen abstehenden Behandlungselemente 6 eintaucht. Die Eintauchtiefe ist dabei die Differenz des Radius R und des Abstands der Achse der Waschbürste 3 von der Fahrzeugoberfläche.

Eine solche Waschbürste 3 ist an sich bekannt und wird daher nicht weiter im Detail erläutert.

Bei der erfindungsgemäßen Waschanlage 1 ist der Bürstenspritzschutz 7 ausgebildet, ein Referenzelement 7 bereitzustellen. Bei anderen Ausführungsbeispielen könnte das Referenzelement 7 jedoch auch von einem separaten Teil bereitgestellt werden. Mittels des Referenzelements 7 wird eine Referenzmessung durchgeführt, wie es später erläutert wird.

Ferner ist die Steuereinheit 8 eingerichtet, die Waschbürste 3 in einer Richtung A senkrecht zur Drehwelle 4 auf das Referenzelement 7 zuzubewegen, bis der Abstand der Achse der Waschbürste 3 von dem Referenzelement 7 einen definierten Wert erreicht hat, welcher in der Steuereinheit 8 gespeichert ist. Beispielsweise kann die Drehwelle 5 mittels der Zustelleinheit 9 in einer Richtung senkrecht zur Drehwelle 5 bewegt werden. Die Steuereinheit 8 ist eingerichtet, die Waschbürste 3 in Rotation zu versetzen und in eine bestimmte Position zu verfahren. Der Abstand der Waschbürste 3 von dem Referenzelement ist in diesem Fall derart, dass bei der Rotation der Waschbürste 3 die Behandlungselemente 6 in reibenden Kontakt mit der Oberfläche des Referenzelements 7 sind. Die Position der Waschbürste 3 relativ zu dem Referenzelement 7 entspricht somit einer bestimmten Eintauchtiefe. Die Steuereinheit 8 steuert die Waschbürste 3 so an, dass die Drehgeschwindigkeit einem bestimmten, in der Steuereinheit 8 gespeicherten Wert entspricht. Dieser Wert korrespondiert mit einer üblichen Drehgeschwindigkeit, wie sie auch bei der Behandlung der Fahrzeugoberfläche 2 angesteuert wird. Die Steuereinheit 8 ist eingerichtet, in diesem rotierenden Zustand der Waschbürste 3 die Leistungsaufnahme zu messen, die erforderlich ist, um die Waschbürste 3 in Rotation zu halten. Es wird somit die Leistungsaufnahme des Motors 4 erfasst. Hierfür können beispielsweise die Stromaufnahme, die Spannung und die Phasenlage des Motors 4 gemessen werden, aus deren Messwerten dann die Leistungsaufnahme berechnet wird. Die Steuereinheit 8 ist eingerichtet, die Werte dieser Leistungsaufnahme bei der Referenzmessung zusammen mit etwaigen Metadaten, wie der Eintauchtiefe, dem Zeitpunkt der Referenzmessung und dem Typ der Behandlungselemente 6 zu speichern.

Der als Referenzelement 7 wirkende Bürstenspritzschutz 7 weist für die Referenzmessung eine der Waschbürste 3 zugewandte Oberfläche auf, die eine Oberflächenrauigkeit besitzt, welche ähnlich der Oberflächenrauigkeit einer Fahrzeugoberfläche ist. Ferner ist diese Oberfläche so beständig, dass sich die Oberflächenrauigkeit auch bei einer großen Anzahl von Referenzmessungen nicht verändert.

Im Folgenden wird ein Ausführungsbeispiel des erfindungsgemäßen Verfahrens beschrieben:
Bei der Erstinbetriebnahme der vorstehend beschriebenen Waschbürste 3 werden zunächst zwei Referenzmessungen durchgeführt. Hierfür wird die Waschbürste 3 mittels des Motors 4 in Rotation versetzt und mittels der Zustelleinheit 9 in Richtung des Referenzelements 7 bewegt, bis die Achse der Waschbürste 3 eine definierte Position und somit einen bestimmten Abstand von dem Referenzelement 7 hat. Dieser Abstand entspricht einer bestimmten Eintauchtiefe der Waschbürste 3 zu Referenzelement 7. Während der Bewegung der Waschbürste 3 in Richtung des Referenzelements 7 rotiert sie mit einer festen Drehzahl, und zwar in einer ersten Drehrichtung. Die Drehzahl der Waschbürste 3 entspricht dabei der Drehzahl, welche auch beim Waschen des Fahrzeugs 2 mittels der Waschbürste 3 verwendet wird. Während der Rotation der Waschbürste 3 sind die Behandlungselemente 6 in reibendem Kontakt mit der Oberfläche des Referenzelements 7. Im Vergleich zu einer Rotation der Waschbürste 3 im Leerlauf, d. h. ohne Kontakt zu einer Oberfläche, erhöht sich die Leistungsaufnahme des Motors 4, wenn die Behandlungselemente in reibendem Kontakt mit der Oberfläche des Referenzelements 7 sind. Die Leistungsaufnahme des Motors 4 während der Bewegung der Waschbürste 3 in Richtung des Referenzelements sowie bei der Endposition der Waschbürste 3 bei der definierten Eintauchtiefe wird mittels der Steuereinheit 8 gemessen und in einem Speicher in Abhängigkeit von der Eintauchtiefe zusammen mit dem Zeitpunkt der Referenzmessung sowie der Drehrichtung und ggf. der Drehzahl während der Referenzmessung gespeichert. Es wird somit eine Kurve aufgenommen, welche die Leistungsaufnahme des Motors 4 in Abhängigkeit von der Eintauchtiefe angibt.

Anschließend wird eine entsprechende Referenzmessung durchgeführt, wobei jedoch die Waschbürste 3 in eine entgegengesetzte Drehrichtung rotiert. Auch in diesem Fall wird der gemessene Wert der Leistungsaufnahme des Motors 4 in Abhängigkeit von der Eintauchtiefe zusammen mit dem Zeitpunkt der Referenzmessung sowie der Drehrichtung und ggf. der Drehzahl während der Referenzmessung gespeichert. Bei der Erstinbetriebnahme der Waschbürste kann Leistungsaufnahme des Motors 4 bei der Referenzmessung von der Drehrichtung abhängen, da die Waschbürste 3 aufgrund der vorherigen Lagerung eine bestimmte Vorzugsrichtung hat.

Nachdem die Referenzmessung abgeschlossen ist, wird die Waschbürste 3 mittels der Zustelleinheit 9 wieder zurück in die in der Figur gezeigte Ruheposition verfahren. Wenn nun ein Fahrzeug 2 mittels der Waschbürste 3 in der Waschanlage 1 gereinigt werden soll, wird die Waschbürste 3 auf an sich bekannte Weise in Rotation versetzt und mit der Zustelleinheit 9 in Richtung der Oberfläche des Fahrzeugs 2 bewegt. Die maximale Eintauchtiefe der Waschbürste 3 in Bezug auf die Oberfläche des Fahrzeugs 2 wird dabei so gewählt, wie die Endposition der Eintauchtiefe bei der zuvor durchgeführten Referenzmessung. Dabei reiben die Oberflächen der Behandlungselemente 6 an der Fahrzeugoberfläche, um diese zu reinigen. Mittels der Steuereinheit 8 wird dabei die Leistungsaufnahme des Motors 4 wie folgt geregelt:
In einem Verfahrensschritt, welcher der Reinigung mit der Waschbürste 3 vorangeht, wird die Höhe des zu reinigenden Fahrzeugs 2 oder genauer die Höhenkontur dieses Fahrzeugs 2 gemessen. Dieser Schritt ist optional und kann weggelassen werden, wenn die Höhe des Referenzelements 7 in etwa der Höhe des Fahrzeugs 2 entspricht. Der Sollwert der Leistungsaufnahme des Motors 4 für die maximale Eintauchtiefe der Waschbürste 3 hängt dann von derjenigen Leistungsaufnahme ab, welche bei der Referenzmessung für dieselbe Drehrichtung bei derselben Eintauchtiefe zuletzt gespeichert wurde. Beispielsweise kann der Sollwert der Leistungsaufnahme bei der Behandlung der Fahrzeugoberfläche von der Leistungsaufnahme abhängen, welche bei der Referenzmessung für dieselbe Drehrichtung bei derselben Eintauchtiefe zuletzt gespeichert wurde, sowie von der Höhe des Fahrzeugs 2 bzw der Höhe des Fahrzeugs 2 bei der aktuellen Position der Waschbürste 3 in Längsrichtung des Fahrzeugs 2 abhängen. Wenn das Referenzelement 7 in etwa dieselbe Höhe wie das Fahrzeug 2 hat, kann der Sollwert der Leistungsaufnahme bei der Behandlung der Fahrzeugoberfläche auch derjenigen Leistungsaufnahme entsprechen, welche bei der Referenzmessung für dieselbe Drehrichtung bei derselben Eintauchtiefe zuletzt gespeichert wurde.

Während sich die Waschbürste 3 der maximalen Eintauchtiefe annähert, wird die Leistungsaufnahme des Motors 4 bei einer Eintauchtiefe in Abhängigkeit von den erfassten Werten der Leistungsaufnahme der Waschbürste 3 bei der Referenzmessung bei einer entsprechenden Eintauchtiefe geregelt. Zusätzlich kann diese Leistungsaufnahme beim Annähern ggf. auch in Abhängigkeit von der Höhe des Fahrzeugs 2 bzw der Höhe des Fahrzeugs 2 bei der aktuellen Position der Waschbürste 3 in Längsrichtung des Fahrzeugs 2 bestimmt werden. Die Kurve der Leistungsaufnahme in Abhängigkeit von der Eintauchtiefe bei der Behandlung der Fahrzeugoberfläche entspricht insbesondere der bei der Referenzmessung aufgenommenen Kurve.

Wenn während des Waschvorgangs die Waschbürste 3 mit einer entgegengesetzten Drehrichtung gedreht wird, wird die Leistungsaufnahme des Motors 4 mittels der Steuereinheit 8 entsprechend geregelt, so dass sie von derjenigen Leistungsaufnahme abhängt bzw. derjenigen Leistungsaufnahme entspricht, welche zuletzt bei einer Referenzmessung für diese Drehrichtung gespeichert wurde, sowie ggf. auch von der Höhe des Fahrzeugs 2 bzw der Höhe des Fahrzeugs 2 bei der aktuellen Position der Waschbürste 3 in Längsrichtung des Fahrzeugs 2 abhängt.

Nach Beendigung des Waschvorgangs wird die Waschbürste 3 mittels der Zustelleinheit 9 wieder zurück in die Ruheposition verfahren.

Auf diese Weise werden anschließend weitere Waschvorgänge für Fahrzeuge 2 durchgeführt. Nach einem bestimmten Zeitintervall oder nach einer bestimmten Anzahl von Waschvorgängen werden erneut zwei Referenzmessungen für die beiden Drehrichtungen, wie vorstehend beschrieben, durchgeführt. Wenn sich bei den beiden Referenzmessungen für die entgegengesetzten Drehrichtungen ergibt, dass die Leistungsaufnahme unabhängig von der Drehrichtung ist, wird bei folgenden Referenzmessungen nur noch eine Referenzmessung für eine Drehrichtung durchgeführt. Die Regelung der Waschbürste 3 wird anschließend bei Waschvorgängen für Fahrzeuge 2 unabhängig von der Drehrichtung geregelt.

Bei den zyklisch durchgeführten Referenzmessungen kann sich ergeben, dass die Leistungsaufnahme des Motors 4 geringer wird. Der Grund hierfür ist, dass die Behandlungselemente 6 sich mit der Zeit abnutzen und sich ggf. auch die Zahl der Behandlungselemente 6 verringert, da beispielsweise Borsten oder dergleichen ausfallen.

Hierdurch wird der Wert der Reibungskraft zwischen den Behandlungselementen 6 und dem Referenzelement 7 verringert, so dass eine geringere Leistungsaufnahme des Motors 4 erforderlich ist, um die Waschbürste mit der definierten Drehzahl bei einer bestimmten Eintauchtiefe in Rotation zu versetzen. Da bei sich anschließenden Waschvorgängen die Leistungsaufnahme des Motors 4 auf den Wert geregelt wird, welcher sich bei der letzten Referenzmessung ergeben hat, ist es möglich, absolute Veränderungen der mechanischen Parameter der Behandlungselemente zu kompensieren.

Wenn der Wert der Leistungsaufnahme des Motors 4 bei der Referenzmessung einen bestimmten Grenzwert unterschritten hat, kann bei dem Verfahren vorgesehen sein, dass die Drehzahl erhöht wird. Hierbei darf jedoch eine obere Grenze für die Drehzahl nicht überschritten werden, um Beschädigungen des Fahrzeugs zu verhindern. Durch die größere Drehzahl kann der Verschleiß der Behandlungselemente 6 in begrenztem Umfang ausgeglichen werden. Der Sollwert für die Leistungsaufnahme des Motors 4 kann in diesem Fall relativ zu dem gemessenen Wert bei der Referenzmessung um einen gewissen Prozentsatz heraufgesetzt werden, um die veränderte Drehzahl relativ zu der Drehzahl bei der Referenzmessung zu berücksichtigen.

Schließlich kann ein Mindestwert für die Leistungsaufnahme des Motors 4 bei der Referenzmessung festgelegt sein. Wird diese Mindestwert unterschritten, wird ausgegeben, dass die Behandlungselemente 6 auszutauschen sind. Das Erfordernis, die Behandlungselemente 6 auszutauschen, kann auch anhand der erfassten Kurve für die Leistungsaufnahme in Abhängigkeit von der Eintauchtiefe bestimmt werden. Nach jedem Austausch der Behandlungselemente 6 wird erneut eine Referenzmessung oder es werden zwei Referenzmessungen für entgegengesetzte Drehrichtungen durchgeführt, wie es vorstehend beschrieben wurde.

Wenn es sich bei der Waschbürste 3 um eine Dachbürste handelt, kann die Leistungsaufnahme der Waschbürste 3 auf entsprechende Weise geregelt werden. Das Referenzelement 7 kann in diesem Fall ein Spritzschutz für die Dachbürste sein.

### Bezugszeichenliste

- 1: Behandlungsanlage
- 2: Fahrzeug
- 3: Behandlungsbürste; Waschbürste
- 4: Motor
- 5: Drehwelle
- 6: Behandlungselemente
- 7: Bürstenspritzschutz; Referenzelement
- 8: Steuereinheit
- 9: Zustelleinheit
- 10: Trägerelement

## Patentansprüche

1. Verfahren zum Behandeln der Oberfläche eines Fahrzeugs (2), bei dem
die Fahrzeugoberfläche mittels zumindest einer rotierenden Behandlungsbürste (3) behandelt wird, wobei die Behandlungsbürste (3) Behandlungselemente (6) umfasst, deren Oberflächen bei der Behandlung mit der Fahrzeugoberfläche in reibenden Kontakt gebracht werden,
**dadurch gekennzeichnet, dass**
eine Referenzmessung durchgeführt wird, bei der die Behandlungsbürste (3) in Rotation versetzt wird und in eine definierte Position relativ zu einem Referenzelement (7) bewegt wird, so dass die Oberflächen der Behandlungselemente (6) in reibenden Kontakt mit der Oberfläche des Referenzelements (7) gebracht werden, und dabei der Wert der Reibungskraft direkt oder indirekt gemessen wird, und
die Behandlungsbürste (3) bei der Behandlung der Fahrzeugoberfläche in Abhängigkeit von dem bei der Referenzmessung gemessenen Wert der Reibungskraft geregelt wird.

2. Verfahren nach Anspruch 1, **dadurch gekennzeichnet, dass** bei der Referenzmessung zunächst die Behandlungsbürste (3) in Rotation versetzt wird und dann in die definierte Position relativ zu dem Referenzelement (7) bewegt wird, wobei während der Bewegung der Behandlungsbürste (3) in Richtung des Referenzelements (7) Werte der Reibungskraft direkt oder indirekt in Abhängigkeit von dem Abstand der Behandlungsbürste (3) von dem Referenzelement (7) erfasst werden.

3. Verfahren nach Anspruch 1 oder 2, **dadurch gekennzeichnet, dass** der Wert der Reibungskraft bei der Referenzmessung mittels der Leistungsaufnahme gemessen wird, die erforderlich ist, um die Behandlungsbürste (3) bei einer bestimmten Drehzahl in Rotation zu halten.

4. Verfahren nach einem der vorhergehenden Ansprüche, **dadurch gekennzeichnet, dass** bei der Behandlung der Fahrzeugoberfläche eine Leistungsaufnahme der Behandlungsbürste (3) in Abhängigkeit von dem gemessenen Wert der Reibungskraft geregelt wird.

5. Verfahren nach einem der vorhergehenden Ansprüche, **dadurch gekennzeichnet, dass** eine Seitenfläche des Fahrzeugs behandelt wird, die Höhe des Fahrzeugs gemessen wird und bei der Behandlung der Fahrzeugoberfläche der Sollwert der Leistungsaufnahme der Behandlungsbürste (3) bei einer bestimmten Eintauchtiefe der Behandlungsbürste (3) in Abhängigkeit von dem gemessenen Wert der Leistungsaufnahme der Behandlungsbürste (3) bei dieser Eintauchtiefe bei der Referenzmessung und in Abhängigkeit von der gemessenen Höhe des Fahrzeugs gewählt wird.

6. Verfahren nach einem der Ansprüche 2 bis 5, **dadurch gekennzeichnet, dass** bei der Behandlung der Fahrzeugoberfläche die Leistungsaufnahme bis zum Erreichen des Sollwerts der Leistungsaufnahme der Behandlungsbürste (3) bei der bestimmten Eintauchtiefe in Abhängigkeit von den erfassten Werten der Leistungsaufnahme der Behandlungsbürste (3) bis zu dieser Eintauchtiefe bei der Referenzmessung bestimmt wird.

7. Verfahren nach einem der Ansprüche 2 bis 6, **dadurch gekennzeichnet, dass** anhand der Werte der Reibungskraft, die während der Bewegung der Behandlungsbürste (3) in Richtung des Referenzelements (7) erfasst worden sind, bestimmt wird, ob die Behandlungselemente (6) der Behandlungsbürste (3) auszutauschen sind.

8. Verfahren nach einem der vorhergehenden Ansprüche, **dadurch gekennzeichnet, dass** die Referenzmessung zyklisch durchgeführt wird und die Behandlungsbürste (3) bei der Behandlung der Fahrzeugoberfläche in Abhängigkeit von dem bei der letzten Referenzmessung gemessenen Wert der Reibungskraft geregelt wird.

9. Verfahren nach einem der vorhergehenden Ansprüche, **dadurch gekennzeichnet, dass** die Referenzmessung nach einem Austausch der Behandlungselemente (6) durchgeführt wird und die Behandlungsbürste (3) bei der Behandlung der Fahrzeugoberfläche in Abhängigkeit von dem bei der letzten Referenzmessung gemessenen Wert der Reibungskraft geregelt wird.

10. Verfahren nach einem der vorhergehenden Ansprüche, **dadurch gekennzeichnet, dass** separate Referenzmessungen für entgegengesetzte Drehrichtungen bei der Rotation der Behandlungsbürste (3) durchgeführt werden und die Behandlungsbürste (3) bei der Behandlung der Fahrzeugoberfläche in Abhängigkeit von dem Wert der Reibungskraft geregelt wird, der bei der letzten Referenzmessung für die Drehrichtung gemessen wurde, mit der die Behandlungsbürste (3) bei der Behandlung der Fahrzeugoberfläche rotiert wird.

11. Verfahren nach einem der vorhergehenden Ansprüche, **dadurch gekennzeichnet, dass** bei der Referenzmessung die Behandlungsbürste (3) in Richtung des Referenzelements (7) bewegt wird, bis die Behandlungsbürste (3) eine definierte Eintauchtiefe in Bezug auf das Referenzelement (7) besitzt.

12. Anlage zum Behandeln der Oberfläche eines Fahrzeugs (2) mit
einer rotierbar um eine Drehwelle (5) gelagerten Behandlungsbürste (3), die einen mit der Drehwelle (5) gekoppelten Motor (4) und Behandlungselemente (6) für einen reibenden Kontakt mit der Fahrzeugoberfläche umfasst, **gekennzeichnet durch**
ein Referenzelement (7) zum Durchführen einer Referenzmessung und
eine Steuereinheit (8), die mit dem Motor (4) gekoppelt ist und mittels derer zur Durchführung der Referenzmessung die Behandlungsbürste (3) in Rotation versetzbar und in eine definierte Position relativ zu dem Referenzelement (7) bewegbar ist, so dass die Oberflächen der Behandlungselemente (6) in reibenden Kontakt mit der Oberfläche des Referenzelements (7) gebracht werden, und dabei der Wert der Reibungskraft direkt oder indirekt messbar ist,
wobei die Behandlungsbürste (3) mittels der Steuereinheit (8) bei der Behandlung der Fahrzeugoberfläche in Abhängigkeit von dem bei der Referenzmessung gemessenen Wert der Reibungskraft regelbar ist.

13. Anlage nach Anspruch 12, **dadurch gekennzeichnet, dass** die Anlage einen Bürstenspritzschutz (7) umfasst, der benachbart zu der Behandlungsbürste (3) angeordnet ist, und der Bürstenspritzschutz (7) die Funktion des Referenzelements (7) bereitstellt.

14. Anlage nach Anspruch 12 oder 13, **dadurch gekennzeichnet, dass** die Drehwelle (5) der Behandlungsbürste (3) so gelagert ist, dass die Behandlungsbürste (3) in einer zur Drehwelle (5) senkrechten Richtung bewegbar ist, wobei die Behandlungsbürste (3) sowohl in Richtung des Fahrzeugs (2) als auch in Richtung des Referenzelements (7) bewegbar ist.

15. Anlage nach einem der Ansprüche 12 bis 14, **dadurch gekennzeichnet, dass** die Oberfläche des Referenzelements (7) eine definierte Oberflächenrauigkeit besitzt.

## Claims

1. A method for treating the surface of a vehicle (2), wherein
the vehicle surface is treated by means of at least one rotating treatment brush (3), which treatment brush (3) comprises treatment elements (6), the surfaces of which are brought into frictional contact with the vehicle surface during the treatment,
**characterized in that**
a reference measurement is carried out, in which a treatment brush (3) is set in rotation and moved into a defined position relative to a reference element (7) so that the surfaces of the treatment elements (6) are brought into frictional contact with the surface of the reference element (7) and, at the same time, the value of the frictional force is measured directly or indirectly, and
the treatment brush (3) is regulated during the treatment of the vehicle surface based on the value of the frictional force measured during the reference measurement.

2. The method of claim 1, **characterized in that** during the reference measurement, the treatment brush (3) is first set in rotation and then moved into the defined position relative to the reference element (7), with values of the frictional force during the movement of the treatment brush (3) in the direction of the reference element (7) being directly or indirectly determined as a function of the distance of the treatment brush (3) from the reference element (7).

3. The method of claim 1 or 2, **characterized in that** during the reference measurement, the value of the frictional force is measured by means of the power input required to keep the treatment brush (3) in rotation at a specific rotational speed.

4. The method of one of the preceding claims, **characterized in that** during the treatment of the vehicle surface, a power input of the treatment brush (3) is regulated as a function of the value of the frictional force measured.

5. The method of one of the preceding claims, **characterized in that** a lateral surface of the vehicle is treated, that the height of the vehicle is measured, and that during the treatment of the vehicle surface, the setpoint value of the power input of the treatment brush (3) at a specific immersion depth of the treatment brush (3) is chosen based on the value of the power input of the treatment brush (3) measured at this immersion depth during the reference measurement and based on the height of the vehicle measured.

6. The method of one of claims 2 to 5, **characterized in that** during the treatment of the vehicle surface up to the point at which the setpoint value of the power input of the treatment brush (3) at the specific immersion depth is reached, the power input is determined as a function of the values of the power input of the treatment brush (3) measured up to this immersion depth during the reference measurement.

7. The method of one of claims 2 to 6, **characterized in that** based on the values of the frictional force measured during the movement of the treatment brush (3) in the direction of the reference element (7), it is determined whether the treatment elements (6) of the treatment brush (3) should be replaced.

8. The method of one of the preceding claims, **characterized in that** the reference measurement is performed cyclically and the treatment brush (3) during the treatment of the vehicle surface is regulated based on the value of the frictional force measured during the last reference measurement.

9. The method of one of the preceding claims, **characterized in that** the reference measurement is performed after a replacement of the treatment elements (6) and **in that** the treatment brush (3) during the treatment of the vehicle surface is regulated based on the value of the frictional force measured during the last reference measurement.

10. The method of any of the preceding claims, **characterized in that** separate reference measurements for opposite directions of rotation during the rotation of the treatment brush (3) are carried out, and **in that** the treatment brush (3) during the treatment of the vehicle surface is regulated based on the value of the frictional force measured during the last reference measurement for the direction of rotation in which the treatment brush (3) is rotated during the treatment of the vehicle surface.

11. The method of one of the preceding claims, **characterized in that** during the reference measurement, the treatment brush (3) is moved in the direction of the reference element (7) until the treatment brush (3) has reached a defined immersion depth relative to the reference element (7).

12. A system for treating the surface of a vehicle (2) by means of
a treatment brush (3) pivotally mounted about a rotary shaft (5), which treatment brush comprises a motor (4) connected to the rotary shaft (5) and treatment elements (6) for frictional contact with the vehicle surface,
**characterized by**
a reference element (7) for carrying out a reference measurement and a control unit (8) which is connected to the motor (4) and by means of which, for carrying out the reference measurement, the treatment brush (3) can be set in rotation and moved into a defined position relative to the reference element (7) so that the surfaces of the treatment elements (6) are brought into frictional contact with the surface of the reference element (7) and, at the same time, the value of the frictional force is measured directly or indirectly,
with the treatment brush (3) during the treatment of the vehicle surface being regulated by means of the control unit (8) based on the value of the frictional force measured during the reference measurement.

13. The system of claim 12, **characterized in that** the system comprises a brush spray guard (7) disposed adjacent to the treatment brush (3) and **in that** the brush spray guard (7) functions as the reference element (7).

14. The system of claim 12 or 13, **characterized in that** the rotary shaft (5) of the treatment brush (3) is mounted in such a way that the treatment brush (3) can be moved in a direction perpendicular to the rotary shaft (5), with the treatment brush (3) being able to move both in the direction of the vehicle (2) and in the direction of the reference element (7).

15. The system of one of claims 12 to 14, **characterized in that** the surface of the reference element (7) has a defined surface roughness.

## Revendications

1. Procédé de traitement de la surface d'un véhicule (2), dans lequel
la surface de véhicule est traitée au moyen d'au moins une brosse de traitement (3) rotative, la brosse de traitement (3) comportant des éléments de traitement (6) dont la surface est mise en contact de friction avec la surface de véhicule lors du traitement,
**caractérisé en ce**
**qu'**une mesure de référence est effectuée, dans laquelle la brosse de traitement (3) est mise en rotation et est déplacée dans une position définie relativement à un élément de référence (7) de sorte que les surfaces des éléments de traitement (6) sont mis en contact de friction avec la surface de l'élément de référence (7) et qu'ainsi la valeur de la force de friction est mesurée directement ou indirectement, et
la brosse de traitement (3) est réglée en fonction de la valeur de la force de friction mesurée lors de la mesure de référence lors du traitement de la surface de véhicule.

2. Procédé selon la revendication 1, **caractérisé en ce que,** lors de la mesure de référence, la brosse de traitement (3) est d'abord mise en rotation et est ensuite déplacée dans la position définie relativement à l'élément de référence (7), où, pendant le déplacement de la brosse de traitement (3) en direction de l'élément de référence (7), des valeurs de la force de friction sont détectées directement ou indirectement en fonction de la distance de la brosse de traitement (3) d'avec l'élément de référence (7).

3. Procédé selon la revendication 1 ou la revendication 2, **caractérisé en ce que** la valeur de la force de friction est mesurée lors de la mesure de référence au moyen de la consommation d'énergie qui est nécessaire pour maintenir la brosse de traitement (3) à un nombre de tours de rotation déterminé.

4. Procédé selon l'une des revendications précédentes, **caractérisé en ce que,** lors du traitement de la surface de véhicule, une consommation d'énergie de la brosse de traitement (3) est réglée en fonction de la valeur de la force de friction mesurée.

5. Procédé selon l'une des revendications précédentes, **caractérisé en ce qu'**une surface latérale du véhicule est traitée, la hauteur du véhicule est mesurée et, lors du traitement de la surface de véhicule, la valeur souhaitée de la consommation d'énergie de la brosse de traitement (3) est choisie pour une profondeur de pénétration déterminée de la brosse de traitement (3) en fonction de la valeur de la consommation d'énergie mesurée de la brosse de traitement (3) pour cette profondeur de pénétration lors de la mesure de référence et en fonction de la hauteur du véhicule mesurée.

6. Procédé selon l'une des revendications 2 à 5, **caractérisé en ce que,** lors du traitement de la surface de véhicule, la consommation d'énergie est déterminée jusqu'à l'arrivée à la valeur souhaitée de la consommation d'énergie de la brosse de traitement (3) pour la profondeur de pénétration déterminée en fonction des valeurs des consommations d'énergie de la brosse de traitement (3) détectées jusqu'à cette profondeur de pénétration lors de la mesure de référence.

7. Procédé selon l'une des revendications 2 à 6, **caractérisé en ce qu'**on détermine si des éléments de traitement (6) de la brosse de traitement (3) doivent être échangés à l'aide des valeurs de la force de friction qui ont été détectées pendant le déplacement de la brosse de traitement (3) en direction de l'élément de référence (7).

8. Procédé selon l'une des revendications précédentes, **caractérisé en ce que** la mesure de référence est effectuée de manière cyclique et la brosse de traitement (3), lors du traitement de la surface de véhicule, est réglée en fonction de la valeur de la force de friction mesurée lors de la dernière mesure de référence.

9. Procédé selon l'une des revendications précédentes, **caractérisé en ce que** la mesure de référence est effectuée après un échange des éléments de traitement (6) et la brosse de traitement (3), lors du traitement de la surface de véhicule, est réglée en fonction de la valeur de la force de friction mesurée lors de la dernière mesure de référence.

10. Procédé selon l'une des revendications précédentes, **caractérisé en ce que** des mesures de référence séparées sont effectuées pour des directions de rotation opposées lors de la rotation de la brosse de traitement (3) et la brosse de traitement (3) est réglée lors du traitement de la surface de véhicule en fonction de la valeur de la force de friction qui a été mesurée pour la direction de rotation lors de la dernière mesure de référence avec laquelle la brosse de traitement (3) a été mise en rotation lors du traitement de la surface de véhicule.

11. Procédé selon l'une des revendications précédentes, **caractérisé en ce que,** lors de la mesure de référence, la brosse de traitement (3) est déplacée en direction de l'élément de référence (7) jusqu'à ce que la brosse de traitement (3) possède une profondeur de pénétration définie en fonction de l'élément de référence (7).

12. Installation de traitement de la surface d'un véhicule (2) dotée
d'une brosse de traitement (3), logée en pouvant être mise en rotation autour d'un arbre de rotation (5), qui comprend un moteur (4) couplé avec l'arbre de rotation (5) et des éléments de traitement (6) destinés à un contact en friction avec la surface de véhicule,
**caractérisée par**
un élément de référence (7) permettant l'exécution d'une mesure de référence et
une unité de commande (8) qui est couplée avec le moteur (4) et au moyen de laquelle la brosse de traitement (3) peut être mise en rotation pour l'exécution de la mesure de référence, et être déplacée dans une position définie relativement à l'élément de référence (7), de sorte que les surfaces des éléments de traitement (6) sont mises en contact de friction avec la surface de l'élément de référence (7), et ainsi la valeur de la force de friction peut être mesurée directement ou indirectement,
où la brosse de traitement (3) peut être réglée au moyen de l'unité de commande (8) lors du traitement de la surface de véhicule en fonction de la valeur de la force de friction mesurée lors de la mesure de référence.

13. Installation selon la revendication 12, **caractérisée en ce que** l'installation comprend une protection anti-projections de brosse (7) qui est disposée au voisinage de la brosse de traitement (3), et la protection anti-projections de brosse (7) fait fonction d'élément de référence (7).

14. Installation selon la revendication 12 ou la revendication 13, **caractérisée en ce que** l'arbre de rotation (5) de la brosse de traitement (3) est logé de telle manière que la brosse de traitement (3) peut être déplacée dans une direction perpendiculaire à l'arbre de rotation (5), la brosse de traitement (3) pouvant se déplacer à la fois en direction du véhicule (2) et en direction de l'élément de référence (7).

15. Installation selon l'une des revendications 12 à 14, **caractérisée en ce que** la surface de l'élément de référence (7) possède une rugosité de surface définie.
